# EUROPÄISCHE PATENTSCHRIFT

(11) **EP 4 322 732 B1**
(45) Veröffentlichungstag und Bekanntmachung des Hinweises auf die Patenterteilung: **09.07.2025**
(21) Anmeldenummer: 22719505.4
(22) Anmeldetag: 11.04.2022
(51) Int. Cl.: A01B 3/42, A01B 3/30

(54) **DREHPFLUG**
REVERSIBLE PLOW
CHARRUE RÉVERSIBLE

(30) Priorität: 12.04.2021 DE 102021109040
(43) Veröffentlichungstag der Anmeldung: 21.02.2024
(73) Patentinhaber: Lemken GmbH & Co KG, 46519 Alpen (DE)
(72) Erfinder: BERGEMANN, Christian, 46244 Bottrop (DE)
(86) Internationale Anmeldenummer: PCT/DE2022/100275
(87) Internationale Veröffentlichungsnummer: WO 2022/218474

(56) Entgegenhaltungen:
- DE-A1- 3 312 545
- DE-A1- 3 522 921
- DE-U1- 8 631 539
- GB-A- 2 044 062

## Beschreibung

Die vorliegende Erfindung betrifft einen Drehpflug gemäß dem Oberbegriff des Anspruches 1 oder 2. Weiterhin betrifft die Erfindung ein Verfahren zum Betreiben eines Drehpflugs gemäß dem Oberbegriff des Anspruches 14.

Ein Drehpflug der eingangs genannten Arten umfasst einen Anbauturm mit Anbaupunkten zur Adaption des Drehpfluges an ein Zugfahrzeug, einen Pflugrahmen, der auf einer Seite rechts wendende Pflugkörper und auf der gegenüberliegenden Seite links wendende Pflugkörper trägt. Der Drehpflug ist um eine Drehachse durch eine von einem Drehzylinder betätigte Drehvorrichtung gegenüber dem Anbauturm drehbar, wobei die Drehbewegung durch einstellbare Neigungsanschläge begrenzt ist. Zur Ansteuerung und Ausführung der Drehbewegung sind der Kolbenraum und ggfs. eine gegenüberliegende Ringkammer des Drehzylinders durch Zuleitungen mit einem ersten Steuergerät und einer ersten Ventileinheit an dem Zugfahrzeug verbunden. Durch den Drehzylinder wird der Pflugrahmen des Drehpfluges jeweils von der einen in die andere Arbeitslage über die Drehachse geschwenkt. Um bei vielscharigen Drehpflügen einen ausreichenden Freiraum zwischen Pflugende und Boden in halbgedrehter Lage zu erhalten, ist es vorgesehen, das Pflugende möglichst weit anzuheben.

Neigungsanschläge sind oftmals als manuell zu betätigende mechanische Bauteile wie Spindeln, Hutmuttern mit Anschlag oder dergleichen, ausgeführt, um einen Neigungswinkel einzustellen. Der Einstellaufwand ist groß, da dieser für beide Seiten des Drehpfluges erfolgen muss. Zudem muss der Bearbeitungsvorgang unterbrochen werden, um eine Anpassung des Neigungswinkels durch die Betätigung der Neigungsanschläge durchführen zu können.

Aus der GB 2 044 062 A ist ein gattungsgemäßer Drehpflug bekannt, welcher zwei dem Drehzylinder zugeordnete Hydraulikzylinder aufweist, die dazu dienen, während eines Dreh- oder Schwenkvorganges den Drehzylinder über dessen Totpunkt hinweg zu bewegen.

Ein weiterer Drehpflug der eingangs genannten Arten ist aus der DE 86 31 539 U1 bekannt. Der Drehpflug weist ein Pflugvordergestell auf, mit einem drehbar im Pflugvordergestell gelagerten Pflugrahmen, welcher mittels einer von einem Hydraulikzylinder betätigten Dreheinrichtung von der einen in die andere Arbeitsstellung verschwenkbar ist und dessen Arbeitsstellung und damit seine Lage relativ zum Pflugvordergestell zur Einstellung einer Neigung des Pflugrahmens frei wählbar ist. Hierzu wird als Hydraulikzylinder als eine Kolbenzylindereinheit verwendet, bei der auf der Kolbenstange der Kolbeneinheit ein zweiter Kolben frei verschiebbar angeordnet ist. Durch die beiden relativ zueinander verschiebbaren Kolben bilden sich drei getrennte Räume aus, die sich unabhängig voneinander mit Drucköl versorgen oder absperren lassen. Zur Einstellung der Endlagen der Drehvorrichtung und damit der Neigung des Pflugrahmens zum Pflugvordergestell ist der Abstand des zweiten Kolbens zu den Enden des Zylinders oder der Abstand der Kolben untereinander einstellbar und festlegbar. Diese spezielle Ausführung des Drehzylinders ermöglicht eine Einstellung des Neigungswinkels durch eine Bedienperson, ohne dass diese das Zugfahrzeug verlassen muss. Ein solcher Hydraulikzylinder ist aber kostenintensiv und ausfallanfällig.

Der Erfindung liegt somit das Problem zugrunde, einen Drehpflug derart auszugestalten und weiterzubilden, dass eine kostengünstigere und zuverlässige Einstellung des Neigungswinkels ermöglicht wird.

Das obige Problem wird bei einem Drehpflug gemäß dem Oberbegriff von Anspruch 1 oder 2 durch die Merkmale des kennzeichnenden Teils des jeweiligen Anspruches gelöst, weiterhin durch entsprechende Verfahrensansprüche.

Gemäß dem Anspruch 1 wird ein Drehpflug vorgeschlagen, welcher einen Anbauturm mit Anbaupunkten zur Adaption des Drehpfluges an ein Zugfahrzeug, einen Pflugrahmen, der auf einer Seite rechts wendende Pflugkörper und auf der gegenüberliegenden Seite links wendende Pflugkörper trägt und um eine Drehachse durch eine von zumindest einem Drehzylinder betätigte Drehvorrichtung zumindest mittelbar gegenüber dem Anbauturm drehbar ist, umfasst, wobei zur Ansteuerung einer Drehbewegung Ringkammer und Kolbenraum des zumindest einen Drehzylinders durch Zuleitungen mit einem ersten Steuergerät und einer ersten Ventileinheit verbunden sind, wobei die Drehbewegung durch einstellbare Neigungsanschläge begrenzt ist. Erfindungsgemäß ist vorgesehen, dass zur Begrenzung der Drehbewegung zwei die Neigungsanschläge bildende Hydraulikzylinder vorgesehen sind, die den Verfahrweg des Drehzylinders oder die dadurch erzeugte Drehbewegung begrenzen.

Alternativ wird gemäß Anspruch 2 ein Drehpflug vorgeschlagen, welcher einen Anbauturm mit Anbaupunkten zur Adaption des Drehpfluges an ein Zugfahrzeug, einen Zugrahmen mit daran angeordnetem Fahrwerk, einen Pflugrahmen, der auf einer Seite rechts wendende Pflugkörper und auf der gegenüberliegenden Seite links wendende Pflugkörper trägt und um eine Drehachse durch eine von einem ersten und einem zweiten Drehzylinder betätigte Drehvorrichtung zumindest mittelbar gegenüber dem Anbauturm oder dem Zugrahmen drehbar ist, umfasst, wobei zur Ansteuerung einer Drehbewegung der Kolbenraum des zumindest eines Drehzylinders durch Zuleitungen mit einem ersten Steuergerät und einer ersten Ventileinheit verbunden sind, wobei die Drehbewegung durch einstellbare Neigungsanschläge direkt oder mittels weiterer, mit den Drehzylindern verbundene Pendellenker begrenzt ist. Erfindungsgemäß ist vorgesehen, dass zur Begrenzung der Drehbewegung zwei die Neigungsanschläge bildende Hydraulikzylinder am Zugrahmen vorgesehen sind, die den Verfahrweg des Drehzylinders, der Pendellenker oder die durch den Verfahrweg erzeugte Drehbewegung begrenzen.

Wesentlich ist die grundsätzliche Überlegung, dass durch die Hydraulikzylinder einerseits der durch den Drehzylinder bewirkte Drehvorgang unterstützt wird und andererseits eine stufenlose Einstellung des Neigungswinkels erfolgen kann.

Die Ausbildung der Neigungsanschläge als Hydraulikzylinder kann dazu beitragen, die Anbindung des Drehzylinders zu vereinheitlichen.

Bevorzugt können die Hydraulikzylinder als einfachwirkende Hydraulikzylinder ausgeführt sein. Alternativ können die Hydraulikzylinder als doppeltwirkende Hydraulikzylinder ausgeführt sein. Dabei können die einfachwirkenden Hydraulikzylinder als Druckzylinder oder als Zugzylinder ausgeführt sein.

Gemäß einer Ausführungsform können die beiden Hydraulikzylinder untereinander durch zumindest eine gemeinsame Leitung kommunizierend miteinander verbunden sind, so dass beide Hydraulikzylinder mit gleichem Druck beaufschlagt sind, wobei die zumindest eine gemeinsame Leitung durch eine zweite Ventileinheit mit einer Zuleitung einer Hydraulikölquelle verbindbar ist, um eine Druckänderung in der zumindest einen gemeinsamen Leitung der beiden Hydraulikzylinder zu bewirken.

Bei der Hydraulikölquelle kann es sich beispielsweise um einen Speicher an dem Drehpflug oder eine Hydraulikpumpe handeln. Alternativ kann die Hydraulikölquelle ein Hydrauliksystem des Zugfahrzeugs sein. Die zweite Ventileinheit kann dabei im einfachsten Fall einen einfachen Absperrkörper wie einen Kugelhahn umfassen, um ein Zuführen oder Abfließen von Hydrauliköl zu ermöglichen.

Bei einer Ausführung als einfach wirkende Hydraulikzylinder, die untereinander ringkammerseitig oder kolbenraumseitig durch die gemeinsame Leitung verbundenen sind, wird das Hydrauliköl bei einer Drehbewegung, die zum Anliegend des Drehzylinders an dem Hydraulikzylinder führt, von dem einen Hydraulikzylinder in den anderen Hydraulikzylinder gedrückt. Durch eine in der gemeinsamen Leitung eingestellte Hydraulikölmenge wird vorgegeben, welchen Verfahrweg der jeweilige Hydraulikzylinder, an dem der Drehzylinder anliegt, zulässt, bevor die Drehbewegung begrenzt wird.

Bei einer Verwendung von doppeltwirkenden Hydraulikzylinder sind diese kolbenraumseitig und ringkammerseitig angesteuert, wobei die beiden Kolbenräume sowie die beiden Ringräume jeweils untereinander durch eine gemeinsame Leitung mit jeweils einer Zuleitung der Hydraulikölquelle verbunden sind.

Bevorzugt kann den Ringräumen der beiden Hydraulikzylinder jeweils eine Blende zur Dämpfung vorgeschaltet sein. Hierdurch können Beschädigungen an den Hydraulikzylindern vermieden werden, wenn durch das Anliegen des Drehzylinders das Hydrauliköl von dem einen Hydraulikzylinder in den anderen, unbelasteten Hydraulikzylinder gedrückt wird.

Die relative Position der beiden Hydraulikzylinder zueinander kann jeweils durch einen Einstellmechanismus einstellbar sein. Der Einstellmechanismus an jedem Hydraulikzylinder dient der Feinjustierung, um Fertigungstoleranzen auszugleichen, die bei einem linksseitigen oder rechtseitigen Wenden des Drehpfluges zu unterschiedlichen Neigungseinstellungen aufgrund der relativen Lage der Hydraulikzylinder zueinander führen können.

Gemäß einer Ausführungsform kann zur Verstellung eines Neigungswinkels ein zweites Steuergerät vorgesehen sein, welches dazu eingerichtet ist, die zweite Ventileinheit anzusteuern, um in Abhängigkeit vom, insbesondere mittelbaren oder unmittelbaren, Anliegen des Drehzylinders an dem jeweiligen Hydraulikzylinder wechselweise die Ringkammer oder den Kolbenraum des Drehzylinders sowie, in Abhängigkeit von einer Zunahme des einzustellenden Neigungswinkels, gleichzeitig den Hydraulikzylinder mit Druck zu beaufschlagen. Der beim Anliegen des Drehzylinders an dem jeweiligen Hydraulikzylinder ausgeübte Druck wird als Signal zur Ansteuerung der zweiten Ventileinheit durch das zweite Steuergerät verwendet. Diese Ausführungsform ermöglich eine seitenunabhängige Einstellung der Neigung durch eine Ansteuerung der Hydraulikzylinder.

Gemäß einer Ausführungsform kann die zweite Ventileinheit ein Steuerventil umfassen, welches als ein Wechselventil, ein elektrisch schaltbares Ventil oder ein mechanisch schaltbares Ventil ausgeführt ist, welches in einer die Kolbenräume oder die Ringräume der Hydraulikzylinder verbindenden gemeinsamen Zuleitung angeordnet ist, welches in Abhängigkeit vom Anliegen des Drehzylinders an dem jeweiligen Hydraulikzylinder eine Zuleitung zu dem zweiten Steuergerät öffnet und zu dem unbelasteten Hydraulikzylinder sperrt. Diese Ausführung der zweiten Ventileinheit hat den Vorteil, dass immer nur der Hydraulikzylinder verfährt, der mit dem Drehzylinder mittelbar oder unmittelbar in Kontakt ist.

Gemäß einer alternativen Ausführungsform kann die zweite Ventileinheit zumindest ein schaltbares Rückschlagventil umfassen, welches die untereinander durch eine gemeinsame Leitung verbundenen Hydraulikzylinder mit einer Zuleitung zu dem zweiten Steuergerät verbindet, wobei beide Hydraulikzylinder mit gleichem Druck beaufschlagt sind. Die relative Position der beiden Hydraulikzylinder zueinander kann jeweils durch eine mechanische Verstellvorrichtung einstellbar sein. Die Hydraulikzylinder sind bevorzugt als Druckzylinder ausgeführt. Bei dieser Ausführungsform kann auf ein als Wechselventil, elektrisch schaltbares Ventil oder mechanisch schaltbares Ventil ausgeführtes Steuerventil verzichtet werden. Die Ansteuerung des schaltbaren Rückschlagventils kann bei einer Druckbeaufschlagung auf der Ringseite oder der Kolbenseite des Drehzylinders erfolgen.

Gemäß einer Weiterbildung kann die zweite Ventileinheit ein Abschaltventil umfassen, welches dem Kolbenraum oder der Ringkammer des Drehzylinders fluidleitend zugeordnet ist, wobei das Abschaltventil während des Drehvorgangs mit einem Steuerdruck aus zumindest einem der beiden Hydraulikzylinder beaufschlagt ist, und bei Erreichen eines am Abschaltventil voreingestellten Abschaltdrucks das Zufließen in den Kolbenraum oder das Abfließen aus der Ringkammer des Drehzylinders unterbricht. Dazu kann das Hydrauliköl des mit dem Drehzylinder in Verbindung stehenden Hydraulikzylinder bei einem Drehvorgang durch das Steuerventil zu dem Abschaltventil geleitet werden, so dass das Abschaltventil bei Erreichen des voreingestellten Abschaltdrucks schließt. Der Abfluss des Hydrauliköls aus dem Drehzylinder oder der Zufluss zu dem Drehzylinder wird verschlossen, sodass die Drehung beendet wird. Die Last kann sich je nach voreingestelltem Abschaltdruck auf der Ringseite des Drehzylinders und den beiden die Neigungsanschläge bildenden Hydraulikzylindern aufteilen, so dass das System sicher eingespannt ist.

Gemäß einer Weiterbildung kann die Drehvorrichtung eine Hebelanordnung umfassen, mittels welcher der Drehzylinder an dem Pflugrahmen angelenkt ist.

Insbesondere kann die Hebelanordnung als Kniehebel ausgeführt sein, mit einem ersten Hebel, der schwenkbar an dem Pflugrahmen angelenkt ist und mit einem zweiten Hebel gelenkig verbunden ist, wobei der zweite Hebel als Kolbenstange des Drehzylinders ausgeführt sein kann.

Gemäß einer Ausführungsform können an den Hydraulikzylindern außenseitig Endanschläge angeordnet sein, an denen sich der erste Hebel abstützt. Die Endanschläge können mechanisch verstellbar ausgeführt sein, um Toleranzen ausgleichen zu können.

Gemäß einer Ausführungsform kann dem Drehzylinder ein erster Sperrblock zugeordnet sein, welcher die Zuleitungen zum Kolbenraum und Ringkammer des Drehzylinders mit Zuleitungen des zweiten Steuergerätes verbindet. Durch das zweite Steuergerät kann zur Neigungsverstellung eine Beaufschlagung des Kolbenraums des Drehzylinders mit Hydrauliköl über eine der Zuleitungen erfolgen, so dass der Drehzylinder ausfährt, während aus der Ringkammer des Drehzylinders sowie dem Hydraulikzylinder, an welchem der des Drehzylinder anliegt, Hydrauliköl zum zweiten Steuergerät abgeleitet wird, wobei der Hydraulikzylinder einfährt. Hierdurch wird eine Abnahme des Neigungswinkels bewirkt. Für eine Zunahme des Neigungswinkels werden die Ringkammer und der Hydraulikzylinder, an welchem der des Drehzylinder anliegt, mit Hydrauliköl über eine der Zuleitungen des zweiten Steuergerätes beaufschlagt, während Hydrauliköl aus dem Kolbenraum des Drehzylinders über die andere Zuleitung des zweiten Steuergerätes abfließen kann. Dabei fährt der Drehzylinder ein. während der entsprechende Hydraulikzylinder ausfährt. Durch das als Wechselventil, elektrisch schaltbares Ventil oder mechanisch schaltbares Ventil ausgeführte Steuerventil kann erreicht werden, dass stets nur der Hydraulikzylinder zur Neigungseinstellung verfahren wird, an dem der Drehzylinder anliegt.

Insbesondere kann den als doppeltwirkenden Hydraulikzylindern ausgeführten Neigungsanschlägen ein zweiter Sperrblock zugeordnet sein, welcher die Hydraulikzylinder mit dem zweiten Steuergerät verbindet.

Gemäß einer Weiterbildung kann eine Rahmeneinschwenkvorrichtung zum Ein- und Ausschwenken an dem Pflugrahmen angreifen, welche in Abhängigkeit eines vom Anliegen des Drehzylinders an einem der Hydraulikzylinder hervorgerufenen Druckes ansteuerbar ist, um den Pflugrahmen vor der Durchführung des Drehvorganges durch den Drehzylinder Rahmeneinschwenkzylinders einzuschwenken und nach der Durchführung des Drehvorganges mit dem Anliegen des Drehzylinders an dem anderen Hydraulikzylinder auszuschwenken. Dadurch kann gewährleistet werden, dass der Pflugrahmen, wenn der Drehzylinder an einem der Hydraulikzylinder anliegt, erst eingeschwenkt wird, um eine Kollision mit dem Boden zu vermeiden, bevor der Drehvorgang durch die Ansteuerung des Drehzylinders erfolgt. Am Ende des Drehvorganges liegt der Drehzylinder an dem anderen Hydraulikzylinder an, so dass dies als Signal zum Auslösen des Ausschwenkens herangezogen wird, um den Pflugrahmen in seine Arbeitsposition zu überführen.

Die eingangs gestellte Aufgabe wird durch ein Verfahren zum Betreiben eines Drehpflugs gemäß dem Anspruch 13 gelöst.

Gemäß dem Anspruch 13 wird ein Verfahren zum Betreiben eines Drehpflugs vorgeschlagen, welcher einen Anbauturm mit Anbaupunkten zur Adaption des Drehpfluges an ein Zugfahrzeug, einen Pflugrahmen, der auf einer Seite rechts wendende Pflugkörper und auf der gegenüberliegenden Seite links wendende Pflugkörper trägt und um eine Drehachse durch eine von einem Drehzylinder betätigte Drehvorrichtung gegenüber dem Anbauturm gedreht wird, umfasst, wobei Ringkammer und Kolbenraum des Drehzylinders zur Ansteuerung einer Drehbewegung mit einem ersten Steuergerät und einer ersten Ventileinheit verbunden sind, wobei die Drehbewegung durch einstellbare Neigungsanschläge begrenzt wird, wobei zur Begrenzung der Drehbewegung zwei die Neigungsanschläge bildende Hydraulikzylinder vorgesehen sind, durch die der Verfahrweg des Drehzylinders begrenzt wird. Auf die Ausführungen und Vorteile des erfindungsgemäßen Drehpfluges darf verwiesen werden.

So kann zur Verstellung eines Neigungswinkels eine zweite Ventileinheit und ein zweites Steuergerät verwendet werden, welche dazu eingerichtet sind, in Abhängigkeit vom, mittelbaren oder unmittelbaren, Anliegen des Drehzylinders an dem jeweiligen Hydraulikzylinder wechselweise die Ringkammer oder den Kolbenraum des Drehzylinders sowie, in Abhängigkeit von einer Zunahme bzw. Erhöhung des einzustellenden Neigungswinkels, gleichzeitig den Hydraulikzylinder mit Druck zu beaufschlagen. zur Begrenzung der Drehbewegung zwei Hydraulikzylinder vorgesehen sind, die den Verfahrweg des Drehzylinders begrenzen, wobei zur Verstellung der Neigung eine zweite Ventileinheit und ein zweites Steuergerät vorgesehen sind, welche angesteuert werden, um in Abhängigkeit vom Anliegen des Drehzylinders an dem jeweiligen Hydraulikzylinder wechselweise die Ringkammer oder den Kolbenraum des Drehzylinders sowie den Kolbenraum des jeweiligen Hydraulikzylinders mit Druck zu beaufschlagen.

Gemäß einer Ausführungsform kann eine Rahmeneinschwenkvorrichtung zum Ein- und Ausschwenken an dem Pflugrahmen angreifen, welche in Abhängigkeit eines vom Anliegen des Drehzylinders an einem der Hydraulikzylinder hervorgerufenen Druckes angesteuert wird, um den Pflugrahmen vor der Durchführung des Drehvorganges durch den Drehzylinder einzuschwenken und nach der Durchführung des Drehvorganges mit dem Anliegen des Drehzylinders an dem anderen Hydraulikzylinder auszuschwenken.

Die vorliegende Erfindung wird nachstehend anhand von in den Zeichnungen dargestellten Ausführungsbeispielen näher erläutert.

Es zeigen:
- Fig. 1: eine Seitenansicht eines Drehpfluges;
- Fig. 2: eine perspektivische Teilansicht eines Anbauturms des Drehpfluges;
- Fig. 3: ein erstes Schaltschema zur Ansteuerung einer Drehbewegung und Einstellung eines Neigungswinkels;
- Fig. 4: ein weiteres Schaltschema zur Ansteuerung einer Drehbewegung und Einstellung eines Neigungswinkels;
- Fig. 5: ein Schaltschema mit als doppeltwirkenden Hydraulikzylindern ausgeführten Neigungsanschlägen;
- Fig. 6: ein Schaltschema mit als einfachwirkenden Hydraulikzylindern ausgeführten Neigungsanschlägen und einem Wechselventil;
- Fig. 7: ein Schaltschema gemäß Fig. 6 mit als Zugzylindern angeordneten Hydraulikzylindern;
- Fig. 8: ein Schaltschema gemäß Fig. 6 mit einem mechanisch schaltbaren Wechselventil; Fig. 9 ein Schaltschema gemäß Fig. 6 mit einem elektrisch schaltbaren Wechselventil.
- Fig. 10: eine alternative Ausbildung gemäß Fig. 2 und Fig. 6
- Fig. 11: eine perspektivische Ansicht eines weiteren Drehpfluges;
- Fig. 12: eine perspektivische Teilansicht eines Drehwerkes aus Fig. 11

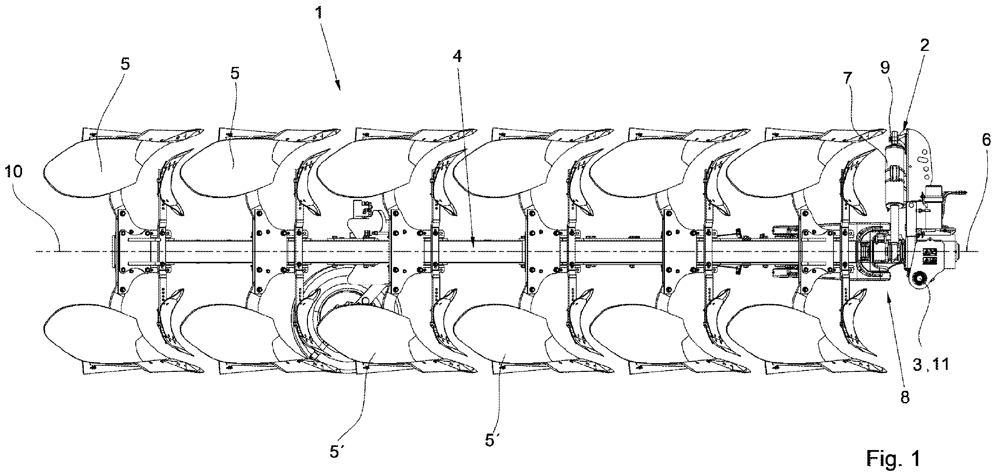

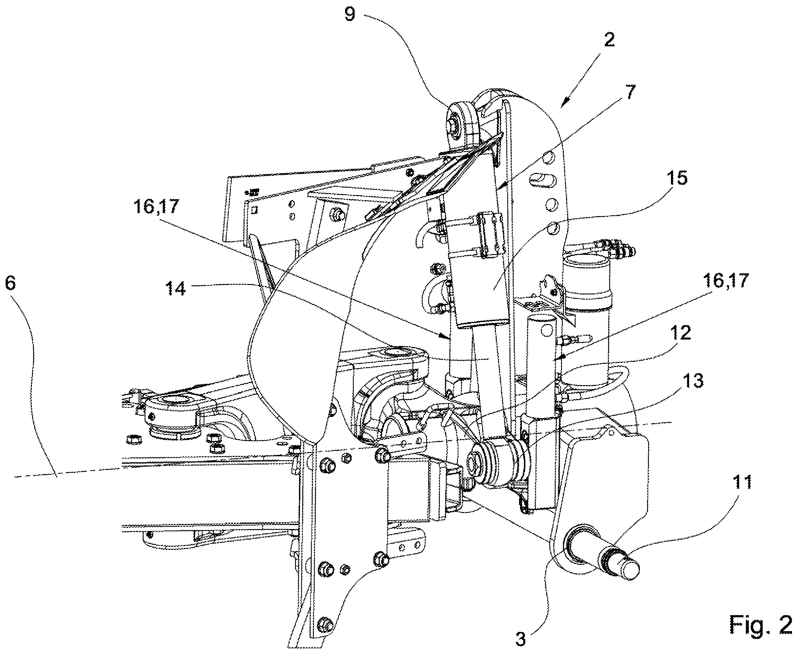

Figur 1 zeigt einen Drehpflug 1 in Seitenansicht. Hierbei handelt es sich um einen Anbaudrehpflug, umfassend einen Anbauturm 2 mit Koppel- oder Anbaupunkten 3 zur Adaption des Drehpfluges 1 an ein - nicht dargestelltes - Zugfahrzeug. Der Drehpflug 1 ist an einen Dreipunktkraftheber des den Drehpflug 1 ziehenden und tragenden Zugfahrzeugs gekoppelt. Der Anbaupunkt 3 bildet eine Schwenkachse 11, um die der Drehpflug 1 in vertikaler Richtung einschwenkbar und ausschwenkbar ist. Der Drehpflug 1 umfasst weiterhin einen Pflugrahmen 4, der auf einer Seite rechts wendende Pflugkörper 5 und auf der gegenüberliegenden Seite links wendende Pflugkörper 5, 5' trägt. Durch den Dreipunktkraftheber des Zugfahrzeugs kann der Drehpflug 1 von einer abgesenkten Arbeitsstellung in eine ausgehobene Stellung zum Transport oder zum Wenden des Drehpfluges 1 bewegt werden. Zum Wenden des Drehpfluges ist der Pflugrahmen 4 um eine Drehachse 6 durch eine von einem Drehzylinder 7 betätigte Drehvorrichtung 8, die als Kniehebelanordnung ausgeführt ist, gegenüber dem Anbauturm 2 drehbar. Der Pflugrahmen 4 ist um einen Winkel von etwa 180° von einer rechtswendenden in eine linkswendende Position schwenkbar. Hierfür ist der Drehzylinder 7 an einem Ende im Anlenkpunkt 9 an dem Anbauturm 2 angelenkt und an seinem anderen Ende im Anlenkpunkt 13 durch einen ersten Hebel 12 beabstandet zur Drehachse 6 mit dem Pflugrahmen 4 gelenkig verbunden, wie in Fig. 2 dargestellt. An dem Pflugrahmen 4 sind hintereinander beabstandet mehrere rechts- und linkswendende Pflugwerkzeuge 5, 5' befestigt. Jeweils ein rechts- und ein linkswendendes Pflugwerkzeug 5, 5' bilden bezogen auf eine Längsachse 10 des Pflugrahmens 4 eine vorzugsweise symmetrisch aufgebaute Befestigungseinheit. In Arbeitsstellung wird der Drehpflug 1 in Fahrtrichtung durch den Boden gezogen. Mit Fahrtrichtung ist die Vorwärtsfahrtrichtung des den Drehpflug 1 in Arbeitsstellung ziehenden Zugfahrzeugs bezeichnet.

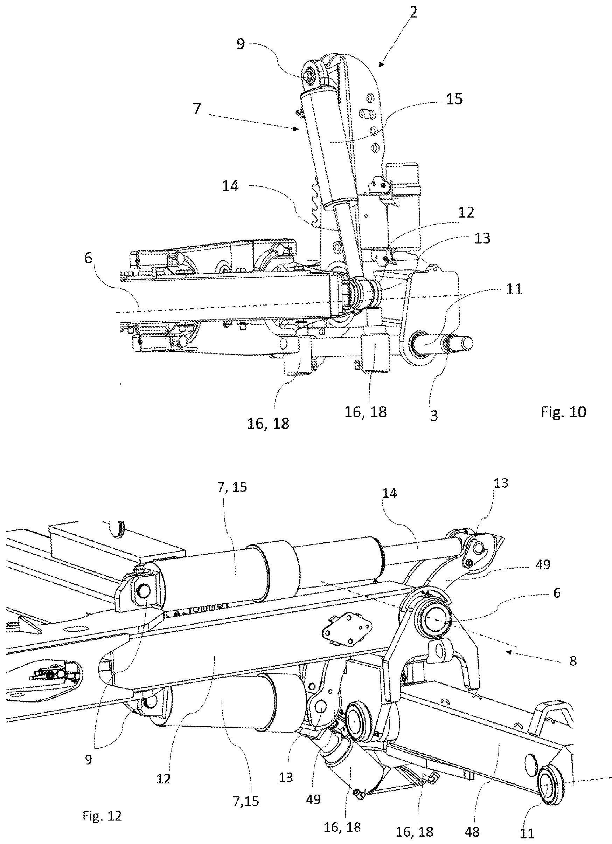

In Fig. 2 ist eine perspektivische Teilansicht des Anbauturms 2 des Drehpfluges 1 dargestellt. Um den Pflugrahmen 4 sicher bis in die gegenüberliegende Arbeitsstellung, d.h. von einer rechtswendenden in eine linkswendende Position oder umgekehrt, zu drehen und zum anderen um ein zu weites Drehen zu vermeiden, sind beidseitig des eine Kolbenstange 14 und einen Zylinder 15 aufweisenden Drehzylinders 7 einstellbare Neigungsanschläge 16 angeordnet. Die Neigungsanschläge 16 sind erfindungsgemäß als Hydraulikzylinder 17 ausgeführt. Insbesondere sind die Hydraulikzylinder 17 als einfach wirkende Hydraulikzylinder 18 oder doppeltwirkende Hydraulikzylinder 19 ausgeführt. Vorliegend sind die Hydraulikzylinder 17 als Zugzylinder mit einem daran angeordnetem Anschlaghaken ausgebildet, auf welchem der Hebel 12 in Endlage der Drehbewegung aufliegt bzw. anschlägt. Alternativ sind in Figur 10 als kostengünstige Plungerzylinder ausgebildete, einfachwirkende Hydraulikzylinder 18 am Anbauturm 2 angeordnet, welche mit ihren abstehenden Kolben direkt die Anschlagfläche der Neigungsanschläge 16 bilden, auf welchen der Hebel 12 in Endlage der Drehbewegung aufliegt bzw. anschlägt. Bei der als Kniehebelanordnung ausgeführten Drehvorrichtung 8 bildet die Kolbenstange 14 des Drehzylinders 7 den zweiten Hebel, der mit dem ersten Hebel 12 im Anlenkpunkt 13 verbunden ist.

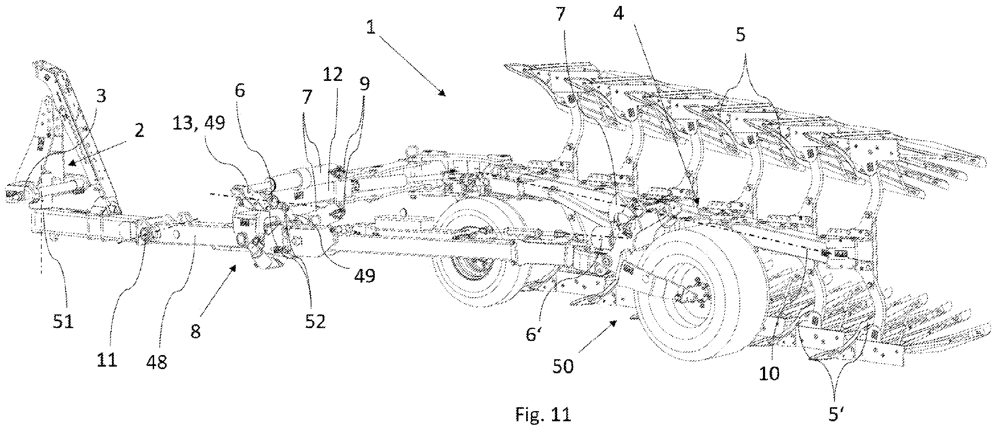

Figur 11 zeigt einen Drehpflug 1 in perspektivischer Ansicht von schräg hinten. Hierbei handelt es sich um einen Aufsatteldrehpflug, umfassend einen Anbauturm 2 mit Koppel- oder Anbaupunkten 3 zur Adaption des Drehpfluges 1 an ein - nicht dargestelltes - Zugfahrzeug. Der Drehpflug 1 ist an einen Dreipunktkraftheber des den Drehpflug 1 ziehenden und tragenden Zugfahrzeugs gekoppelt. Der Anbaupunkt 3 ist über eine Lenkachse 51 seitlich schwenkbar mit einem Zugrahmen 48 und an dessen Ende mit einem Fahrwerk 50 verbunden. Die Schwenkachse 11 im Zugrahmen bildet ein Gelenk, um das der Drehpflug 1 im vorderen Bereich in vertikaler mit dem Anbauturm durch das Zugfahrzeug ausgehoben und abgesenkt werden kann. Der Aushub und das Absenken des hinteren Bereiches des Drehpfluges 1 durch das entsprechend ausgebildete Fahrwerk 50. Der Drehpflug 1 umfasst weiterhin einen Pflugrahmen 4, der auf einer Seite rechts wendende Pflugkörper 5 und auf der gegenüberliegenden Seite links wendende Pflugkörper 5, 5' trägt. Durch den Dreipunktkraftheber des Zugfahrzeugs und das Fahrwerk 50 kann der Drehpflug 1 von einer abgesenkten Arbeitsstellung in eine ausgehobene Stellung zum Transport oder zum Wenden des Drehpfluges 1 bewegt werden. Zum Wenden des Drehpfluges ist der Pflugrahmen 4, welcher mit dem Hebel 12 verbunden ist, um eine Drehachse 6 durch eine von einem ersten und einem zweiten Drehzylinder 7 betätigte Drehvorrichtung 8, gegenüber dem Zugrahmen 48 drehbar. Ein weiteres Drehgelenk mit einer Drehachse 6' ist hinten am Fahrwerk angeordnet. Der Pflugrahmen 4 ist um einen Winkel von etwa 180° von einer rechtswendenden in eine linkswendende Position schwenkbar. Eine Mittelstellung von etwa 90° stellt die Transportstellung dar, in welcher der Pflugrahmen 4 mit den Pflugkörpern 5, 5' oberhalb des Fahrwerkes angeordnet sind. Zur Erzeugung der Drehbewegung sind zwei Drehzylinder 7 an einem Ende jeweils in einem Anlenkpunkt 9 an dem Hebel 12 angelenkt und an seinem anderen Ende jeweils in einem Anlenkpunkt 13 mittels weiterer Pendellenker 49, welche auf der jeweiligen Wendeseite des Pflugrahmens 4 am Zugrahmen 48 anschlagen, beabstandet zur Drehachse 6 mit dem Zugrahmen 48 gelenkig verbunden, wie in Fig. 12 dargestellt. Die Pendellenker 49 sind mittels weiterer Pendelgelenke rechts und links der Drehachse 6 in dessen Nähe an der Drehvorrichtung 8 angeordnet. Der in der jeweiligen Arbeitsstellung des Drehpfluges 1 unbelastete Pendellenker 49 wird durch den in Endlage ausgefahrenen Drehzylinder 7 um das Pendelgelenk 52 nach oben mitgeschleppt und führt den ausgefahrenen Drehzylinder 7 etwa parallel zum Hebel 12, um Kollisionen zu vermeiden. An dem Pflugrahmen 4 sind hintereinander beabstandet mehrere rechts- und linkswendende Pflugwerkzeuge 5, 5' befestigt. Jeweils ein rechts- und ein linkswendendes Pflugwerkzeug 5, 5' bilden bezogen auf eine Längsachse 10 des Pflugrahmens 4 eine vorzugsweise symmetrisch aufgebaute Befestigungseinheit. In Arbeitsstellung wird der Drehpflug 1 in Fahrtrichtung durch den Boden gezogen. Mit Fahrtrichtung ist die Vorwärtsfahrtrichtung des den Drehpflug 1 in Arbeitsstellung ziehenden Zugfahrzeugs bezeichnet.

In Fig. 12 ist eine perspektivische Teilansicht des Anbauturms 2 des Drehpfluges 1 dargestellt. Die Drehzylinder sind mit einer, vorzugsweise teleskopischen, Kolbenstange 14 und einen Zylinder 15 ausgeführt. Um den Pflugrahmen 4 sicher bis in die gegenüberliegende Arbeitsstellung, d.h. von einer rechtswendenden in eine linkswendenden Position oder umgekehrt, zu drehen und zum anderen um ein zu weites Drehen zu vermeiden, sind beidseitig am zugrahmenseitigen Ende der Drehzylinder 7 bzw. an den Pendellenkern 49, welche über die Gelenkpunkte 13 jeweils mit den Drehzylinder 7 verbunden sind, einstellbare Neigungsanschläge 16 angeordnet. Die Neigungsanschläge 16 stützen sich am unteren Ende gegen ein Widerlager des Zugrahmens 48 ab und sind vorzugsweise V-förmig zueinander angeordnet. Sie kommen in der jeweils eingefahrenen Endlage der Drehzylinder 7 bzw. der untersten Stellung der Pendellenker 49 zur Wirkung. Die Neigungsanschläge 16 sind erfindungsgemäß als Hydraulikzylinder 17 ausgeführt. Insbesondere sind die Hydraulikzylinder 17 als einfachwirkende Hydraulikzylinder 18 oder doppeltwirkende Hydraulikzylinder 19 ausgeführt. Vorliegend sind die Hydraulikzylinder 17 als kostengünstige Plungerzylinder ausgebildete, einfachwirkende Hydraulikzylinder 18 dargestellt, auf welchen die jeweiligen Pendellenker 49 und somit mittelbar die Drehzylinder 7 in der Endlage der Drehbewegung aufliegen bzw. anschlagen.

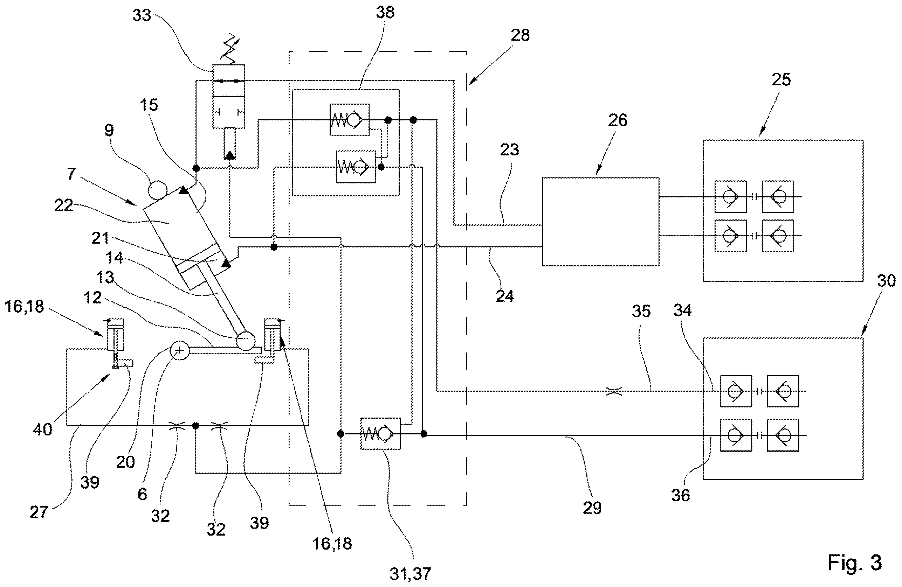

Die Darstellung in Fig. 3 zeigt ein erstes Schaltschema zur Ansteuerung einer Drehbewegung des Pflugrahmens 4 durch den Drehzylinder 7 und zur Einstellung eines Neigungswinkels. Das Einstellen bzw. Verstellen des Neigungswinkels während eines Arbeitsvorgangs ist erforderlich, um einen voreingestellten Neigungsanschlag zu überfahren bzw. zu verändern, insbesondere um die letzte Furche eines Ackers weniger tief zu hinterlassen. Dieses Vorgehen erleichtert das spätere Rangieren bei nachfolgenden Arbeitsvorgängen. Insbesondere im Bereich von Entwässerungsgräben ist es wichtig, die angrenzende Furche nicht zu tief zu pflügen, um den Grabenaufbau nicht zu zerstören und um zu verhindern, dass Erde in den Graben fällt. Das Überfahren des Anschlages ermöglicht auch ein paralleles Einsetzen des Pfluges, was zu einem geraden Vorgewende führt.

Zur Ansteuerung einer Drehbewegung sind Ringkammer 21 und Kolbenraum 22 des Drehzylinders 7 durch Leitungen 23, 24 mit einem ersten Steuergerät 25 und einer ersten Ventileinheit 26 verbunden. Die Druckbeaufschlagung von Ringkammer 21 oder Kolbenraum 22 des Drehzylinders 7 durch die Leitungen 23, 24 führt zum Drehen des Pflugrahmens 4. Dabei fährt der Drehzylinder 7 in Abhängigkeit von der Drehrichtung gegen einen der als Neigungsanschläge 16 ausgeführten Hydraulikzylinder 17, d.h. liegt an diesem an. Dabei kann der Drehzylinder 7 mittelbar, wie in Fig. 2 gezeigt, oder unmittelbar an dem Hydraulikzylinder 17 anliegen.

Die Hydraulikzylinder 17 sind als einfachwirkende Hydraulikzylinder 18, hier als Zugzylinder angeordnet, ausgeführt. Die Hydraulikzylinder 18 sind untereinander durch eine gemeinsame Leitung 27 kommunizierend miteinander verbunden sind, so dass beide Hydraulikzylinder 18 mit gleichem Druck beaufschlagt sind. Die zumindest eine gemeinsame Leitung 27 ist durch eine zweite Ventileinheit 28 mit einer Zuleitung 29 mit einer Hydraulikölquelle, die hier und vorzugsweise als zweites Steuergerät 30 ausgeführt ist, verbunden ist, um eine Druckänderung in der zumindest einen gemeinsamen Leitung 27 der beiden einfachwirkenden Hydraulikzylinder 18 zu bewirken. Hierzu umfasst die zweite Ventileinheit 28 einen Absperrkörper 31, welches im dargestellten Ausführungsbeispiel als entsperrbares Rückschlagventil 37 ausgeführt ist. Der Absperrkörper 31 verbindet die gemeinsame Leitung 27 mit der Zuleitung 29. Im einfachsten Fall kann der Absperrkörper 31 als Kugelhahn ausgeführt sein.

Bei dieser Ausführung als einfach wirkende Hydraulikzylinder 18, die untereinander ringkammerseitig oder kolbenraumseitig durch die gemeinsame Leitung 27 kommunizierend verbundenen sind, wird das Hydrauliköl bei einer Drehbewegung des Pflugrahmens 2, die zum Anliegend des Drehzylinders 7 an einem der Hydraulikzylinder 18 und somit zum Einfahren dieses Hydraulikzylinders 18 führt, von dem einen Hydraulikzylinder 18 in den anderen Hydraulikzylinder 18 gedrückt. Durch eine in der gemeinsamen Leitung 27 eingestellte Hydraulikölmenge wird vorgegeben, welchen Verfahrweg der jeweilige Hydraulikzylinder 18, an dem der Drehzylinder 7 anliegt, zulässt, bevor die Drehbewegung begrenzt wird. Erreicht wird dies dadurch, dass der unbelastete Hydraulikzylinder 18 vollständig eingefahren wird, wobei in dem durch das Anliegen des Drehzylinders 7 belasteten Hydraulikzylinder 18 eine Hydraulikölsäule verbleibt, die ein weiteres Verdrehen um die Drehachse 6 im Anlenkpunkt 20 verhindert. Den einfachwirkenden Hydraulikzylindern 18 kann jeweils eine Blende 32 zugeordnet sein, welche das Umströmen des Hydrauliköls vom belasteten zum unbelasteten Hydraulikzylinder 18 verlangsamt, um den Drehvorgang in den Endlagen zu dämpfen.

Die zweite Ventileinheit 28 kann ein Abschaltventil 33 umfassen, welches dem Kolbenraum 22 oder der Ringkammer 21 des Drehzylinders 7 fluidleitend zugeordnet ist. Das Abschaltventil 33 ist bei einem Anliegen des Drehzylinders 7 an einem der beiden Hydraulikzylinder 18 während des Drehvorgangs mit Druck aus der gemeinsamen Leitung 27 beaufschlagt und kann, je nach Anordnung des Abschaltventils 33, bei Erreichen eines an dem Abschaltventil 33 voreingestellten Abschaltdrucks das Zufließen zu dem Kolbenraum 22 oder das Abfließen aus der Ringkammer 21 des Drehzylinders 7 unterbrechen.

Im dargestellten Ausführungsbeispiel gemäß Fig. 3 verbindet das Abschaltventil 33 die Ringkammer 21 des Drehzylinders 7 mit der ersten Ventileinheit 26 und dem ersten Steuergerät 25. Bei einem Drehvorgang wird der Kolbenraum 22 vom ersten Steuergerät 25 über die Zuleitung 23 mit Hydrauliköl beaufschlagt. Das in der Ringkammer 21 befindliche Hydrauliköl fließt über das Abschaltventil 33 und die Leitung 24 zum ersten Steuergerät 25 zurück. Somit kann der Drehzylinder 7 ausfahren und liegt an einem der beiden Hydraulikzylinder 18 an und belastet diesen. Das Hydrauliköl des belasteten Hydraulikzylinders 18 strömt durch die gemeinsame Leitung 27 zum unbelasteten Hydraulikzylinder 18, bis dieser vollständig eingefahren ist. Durch die Zuleitung 29 wird das Hydrauliköl zum Ansteuern des Abschaltventils 33 weitergeleitet. Das Rückschlagventil 37 sperrt die Zuleitung 29, um ein Abfließen aus der gemeinsamen Leitung 27 zu verhindern. Das Abschaltventil 33 schließt die Leitung 24 vom ersten Steuergerät 25, wenn ein voreingestellter Druck in der gemeinsamen Leitung 27 aufgebaut wurde. Dadurch kann das Zufließen von Hydrauliköl zu dem Kolbenraum 22 des Drehzylinders 7 vom ersten Steuergerät 25 unterbrochen werden, so dass der Drehvorgang beendet wird.

Für das Drehen in die Gegenrichtung wird die Ringkammer 21 vom ersten Steuergerät 25 über die Leitung 24 mit Hydrauliköl beaufschlagt. Das in dem Kolbenraum 22 befindliche Hydrauliköl fließt über die Leitung 23 zum ersten Steuergerät 25 zurück. Somit kann der Drehzylinder 7 einfahren. Das Entlasten des Hydraulikzylinders 18 durch den einfahrenden Drehzylinder 7 führt zu einem Abfallen des Steuerdrucks am Abschaltventil 33, so dass dieses öffnet.

Für eine Einstellung oder Verstellung des Neigungswinkels wird vom zweiten Steuergerät 30 durch die Zuleitung 29 am Anschluss 36 Hydrauliköl in die Ringkammer 21 des Drehzylinders 7 geleitet, so dass dieser einfährt. Gleichzeitig wird der Ablauf des Hydrauliköls aus dem Kolbenraum 22 über einen ersten Sperrblock 38, der von der zweiten Ventileinheit 28 umfasst ist, dem Anschluss 34 des zweiten Steuergerät 30 zugeleitet, so dass der belastete Drehzylinder 7 einfährt. Die Hydraulikölmenge in der gemeinsamen Leitung 27 zwischen den Hydraulikzylinder 18 wird dabei erhöht, so dass beide Hydraulikzylinder 18 einfahren.

Für eine gegensinnige Verstellung des Neigungswinkels wird vom zweiten Steuergerät 30 durch eine Zuleitung 35 am Anschluss 34 Hydrauliköl in den Kolbenraum 22 des Drehzylinders 7 geleitet, während das Hydrauliköl aus der Ringkammer 21 abfließt, so dass dieser ausfährt. Die Hydraulikölmenge in der gemeinsamen Leitung 27 zwischen den Hydraulikzylinder 18 wird über das entsperrbare Rückschlagventil 37 durch Abfließen zum Anschluss 36 reduziert, so dass die Hydraulikzylinder 18 aufgrund der Belastung durch den anliegenden Drehzylinder 7 einfahren.

Gemäß einer Ausführungsform können an den Hydraulikzylindern 18 außenseitig Endanschläge 39 angeordnet sein, an denen sich der erste Hebel 12 abstützt. Die Endanschläge 39 können durch einen Einstellmechanismus 40 mechanisch verstellbar ausgeführt sein, um Fertigungstoleranzen ausgleichen zu können.

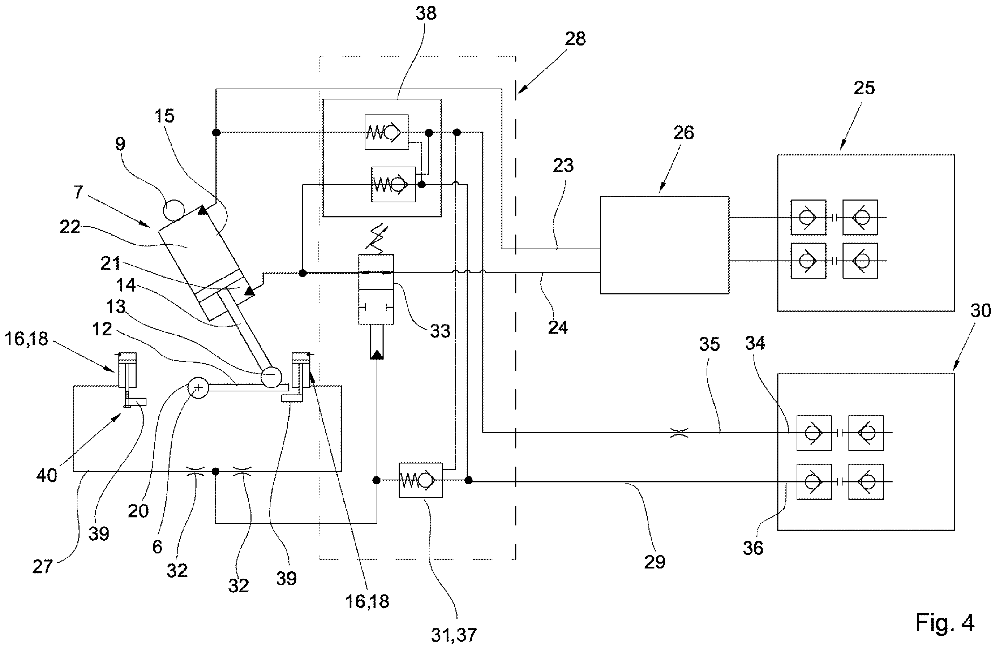

In Fig. 4 ist ein weiteres Schaltschema zur Ansteuerung einer Drehbewegung und einer Einstellung des Neigungswinkels dargestellt. Diese Ausführungsform unterscheidet sich dadurch, dass die Abschaltung der Drehbewegung auf der Ringkammerseite des Drehzylinders 7 erfolgt. Die Ansteuerung des Abschaltventils 33 erfolgt entsprechend der in Fig. 3 beschrieben Verfahrensweise in Abhängigkeit vom Druck in der gemeinsamen Leitung 27. Hier steuert das Absperrventil 33 das Abfließen von Hydrauliköl aus dem Kolbenraum 22 des Drehzylinders 7.

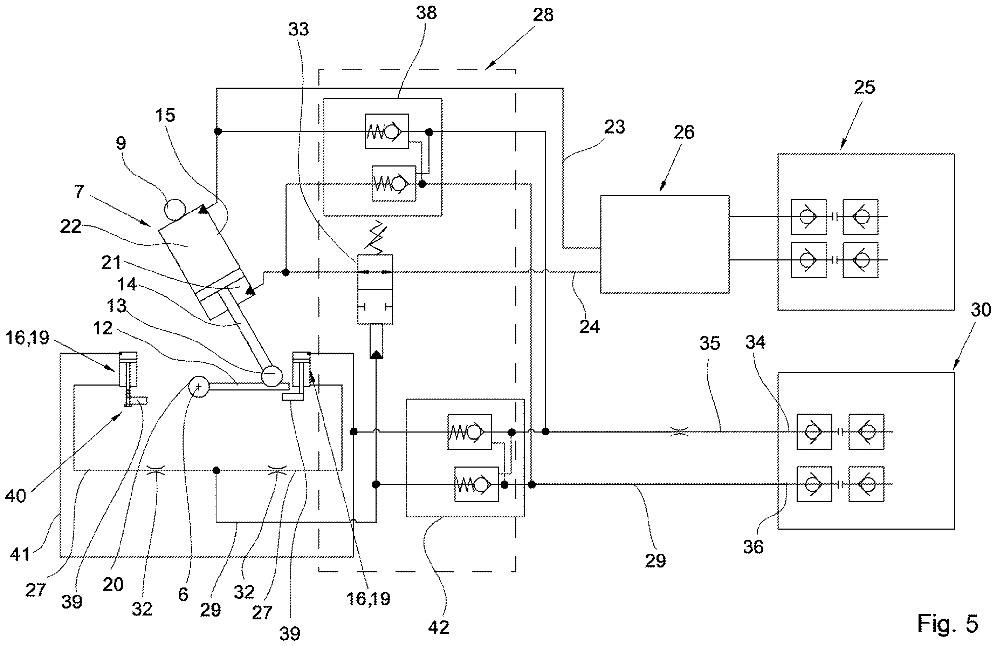

Die Darstellung in Fig. 5 zeigt ein Schaltschema mit als doppeltwirkenden Hydraulikzylindern 19 ausgeführten Neigungsanschlägen 16. Die Ansteuerung zum Abschalten der Drehbewegung erfolgt entsprechend dem Ausführungsbeispiel gemäß Fig. 4 auf der Ringkammerseite des Drehzylinders 7 durch das Abschaltventil 33. Die zweite Ventileinheit 28 umfasst gemäß dieser Ausführungsform anstelle des als entsperrbares Rückschlagventil 37 ausgeführten Absperrkörpers 31 einen als zweiten Sperrblock 42 ausgeführten Absperrkörpers 31. Der zweite Sperrblock 42 verbindet die gemeinsame Leitung 27, welche die Ringkammern der doppeltwirkenden Hydraulikzylinder 19 untereinander kommunizierend verbindet und eine weitere gemeinsame Leitung 41, welche die Kolbenräume der doppeltwirkenden Hydraulikzylinder 19 untereinander kommunizierend verbindet mit den Anschlüssen 34, 36 des zweiten Steuergerätes 30. Zur Verstellung des Neigungswinkels wird die Hydraulikölmenge der durch die gemeinsamen Leitungen 29, 41 auf der Kolbenraumseite und der Ringkammerseite kommunizierend verbundenen Hydraulikzylinder 19 verändert.

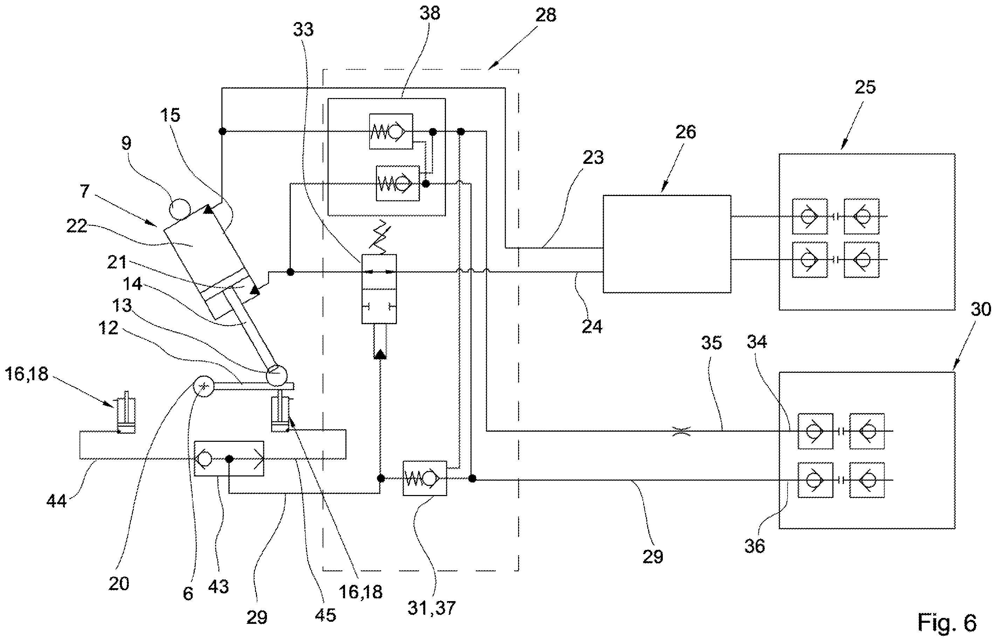

In Fig. 6 ist ein Schaltschema mit als einfachwirkenden Hydraulikzylindern 18 ausgeführten Neigungsanschlägen 16 und einem als Steuerventil ausgeführten Wechselventil 43 dargestellt. Der wesentliche Unterschied zu den vorhergehend beschriebenen Ausführungsformen besteht darin, dass durch das Wechselventil 43 eine seitenunabhängige Anpassung des Neigungswinkels durchgeführt werden kann. Von dem Wechselventil 43 gehen separate Zuleitungen 44, 45 zu dem jeweiligen Hydraulikzylinder 18 ab, welche im vorliegenden Fall der als Druckzylinder angeordneten Hydraulikzylinder 18 den jeweiligen Kolbenräum mit dem Wechselventil 43 verbinden.

Bei der Neigungsverstellung wird durch das zweite Steuergerät 30 über den Anschluss 34 Hydrauliköl in den Kolbenraum 22 des Drehzylinders 7 geleitet, während gleichzeitig aus der Ringkammer 21 und aus dem durch den anliegenden Drehzylinder 7 belasteten einfachwirkenden Hydraulikzylinder 18 abfließendes dem Anschluss 36 des zweiten Steuergerätes zugeleitet wird, so dass der Drehzylinder ausfährt und der belastete Hydraulikzylinder 18 einfährt.

Bei der Neigungsverstellung in die andere Richtung wird das Hydrauliköl über den Anschluss 36 in den belasteten Hydraulikzylinder 18 und die Ringkammer 21 des Drehzylinders 7 geleitet, so dass der Drehzylinder 7 einfährt und der belastete Hydraulikzylinder 18 ausfährt.

Das Wechselventil 43 sorgt dafür, dass immer nur der Hydraulikzylinder 18 verfährt, der durch den mittelbar oder unmittelbar anliegenden Drehzylinder 7 belastet ist.

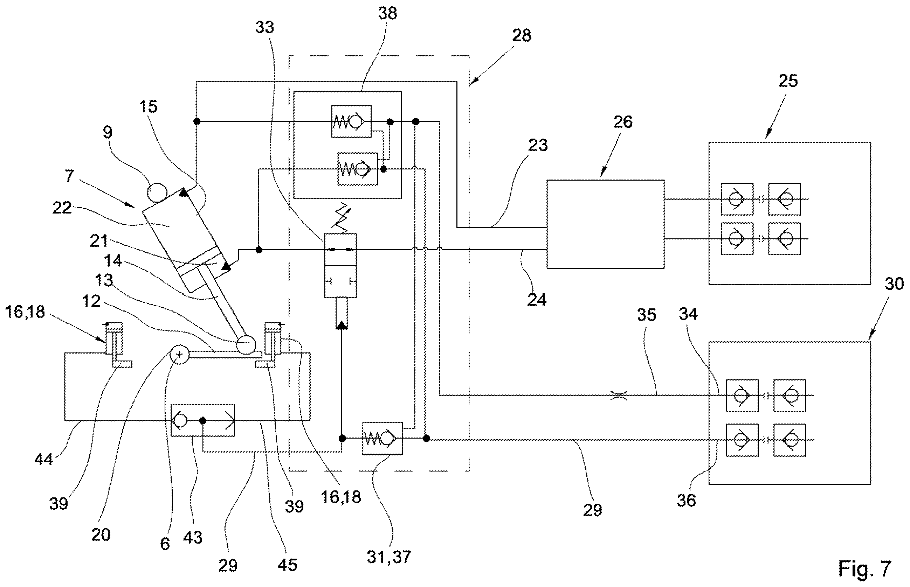

Die Darstellung in Fig. 7 zeigt ein Schaltschema gemäß Fig. 6 mit als Zugzylindern angeordneten Hydraulikzylindern 18. Die separaten Zuleitungen 44, 45 verbinden hierbei eine Ringkammer des jeweiligen Hydraulikzylinders 18 mit dem Wechselventil 43. Die Funktionsweis entspricht im Übrigen der der Ausführungsform gemäß Fig. 6.

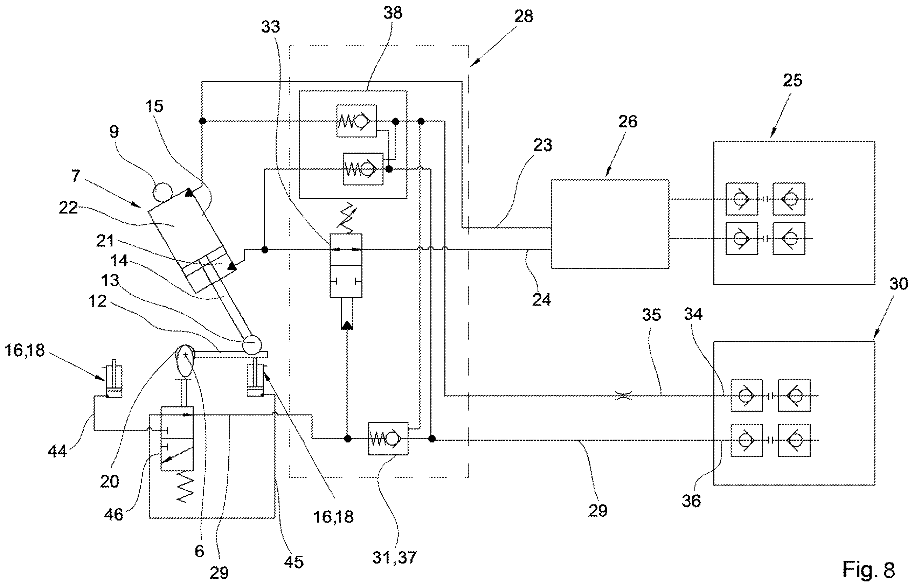

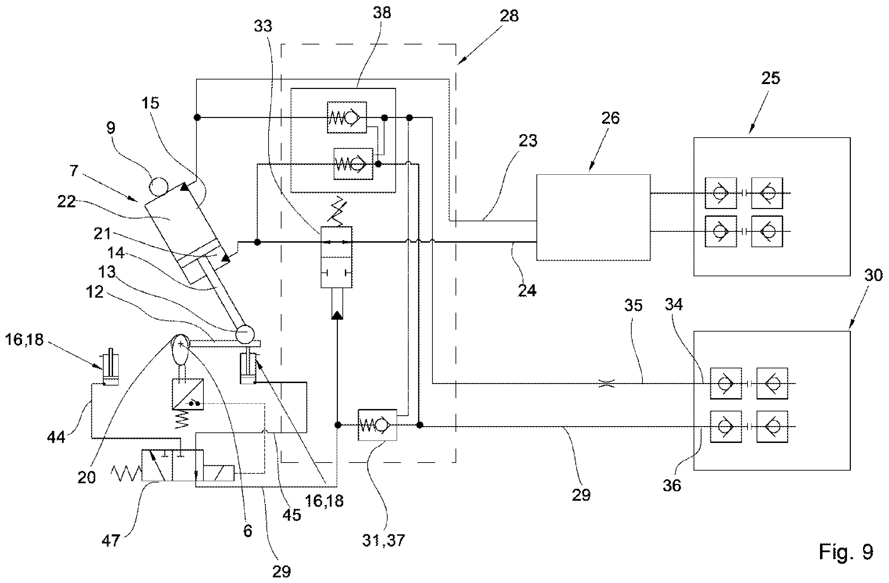

In den Fig. 8 und 9 sind zwei weitere Schaltschemata gemäß Fig. 6 dargestellt. Bei diesen weiteren Ausführungsformen ist gemäß Fig. 8 anstelle des Wechselventils ein mechanisch schaltbares Ventil 46 und gemäß Fig. 9 ein elektrisch schaltbares Ventil 47 vorgesehen. Bei der Ausführung des Steuerventils als mechanisch schaltbares Ventil 46 kann die jeweilige Umschaltung durch die Drehbewegung der als Kniehebelanordnung ausgeführten Drehvorrichtung 8 angesteuert werden. Bei der Ausführung des Steuerventils als elektrisch schaltbares Ventil 47 kann die jeweilige Umschaltung ebenfalls an die Drehbewegung der Drehvorrichtung 8 gekoppelt sein.

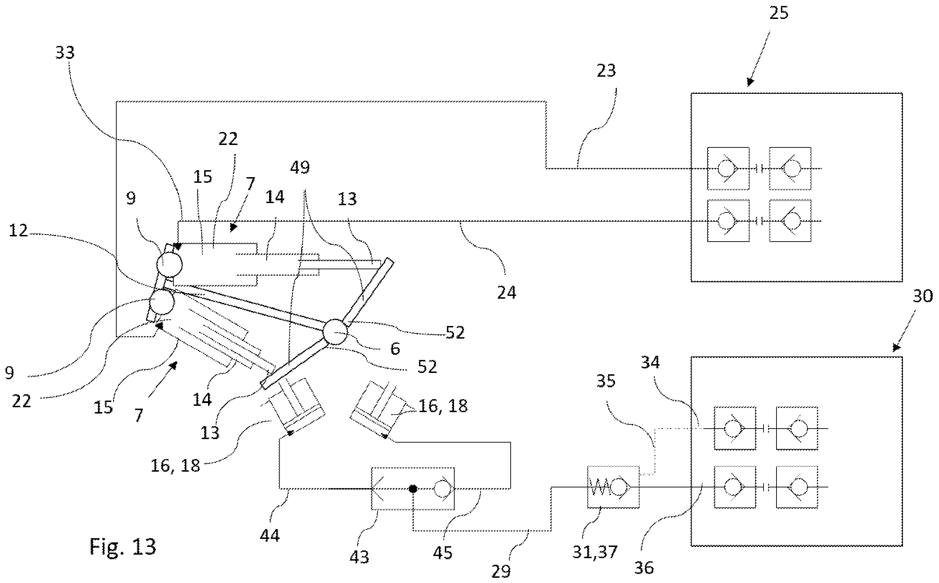

In Fig. 13 ist ein Schaltschema ähnlich zu Fig. 6, jedoch adaptiert auf die Ausführung gemäß Fig. 11 und 12, ebenfalls mit als einfachwirkenden Hydraulikzylindern 18 ausgeführten Neigungsanschlägen 16 und einem als Steuerventil ausgeführtes Wechselventil 43 dargestellt. Der wesentliche Unterschied zu den vorhergehend beschriebenen Ausführungsformen besteht darin, dass nunmehr zwei einfachwirkende Drehzylinder 7 in Verbindung mit Pendellenkern 49 vorsehen sind, welche am Ende des Zylinders über Gelenkpunkte 9 mit dem Hebelarm 12 verbunden sind. Auch hier kann durch das Wechselventil 43 eine seitenunabhängige Anpassung des Neigungswinkels durchgeführt werden. Von dem Wechselventil 43 gehen separate Zuleitungen 44, 45 zu dem jeweiligen Hydraulikzylinder 18 ab, welche im vorliegenden Fall der als Druckzylinder angeordneten Hydraulikzylinder 18 den jeweiligen Kolbenraum mit dem Wechselventil 43 verbinden.

Bei der Neigungsverstellung wird durch das zweite Steuergerät 30 über den Anschluss 36 Hydrauliköl in den Kolbenraum des Hydraulikzylinder 18 geleitet, welcher durch den anliegenden Drehzylinder 7 und dem entsprechenden Pendellenker 49 belastet ist. Um aus dem einfachwirkenden Hydraulikzylinder 18 abfließendes Hydrauliköl dem Anschluss 36 des zweiten Steuergerätes zuzuleiten, wird mittels eines Drucksignals des zweiten Steuergerätes ein als entsperrbares Rückschlagventil 31 ausgebildeter Absperrkörper 31 geöffnet, so dass das Hydrauliköl durch die Leitung 36 in das zweite Steuergerät 30 abfließen kann und der belastete Hydraulikzylinder 18 einfährt.

Das Wechselventil 43 sorgt dafür, dass immer nur der Hydraulikzylinder 18 verfährt, der durch den mittelbar oder unmittelbar anliegenden Drehzylinder 7 bzw. seinem Pendellenker belastet 49 ist. Der jeweils andere, unbelastete Drehzylinder 7 zieht in seiner ausgefahrenen Stellung seinen verbundenen Pendellenker 49 nach oben nach, so dass der andere Hydraulikzylinder 18 unbelastet ist und dessen Hydraulikölzufuhr durch das Wechselventil 43 blockiert ist.

Bei der Neigungsverstellung in die andere Richtung wird das Hydrauliköl über den Anschluss 36 in den anderen, gegenüberliegend belasteten Hydraulikzylinder 18 ein- oder ausgeleitet, so dass auch hier der durch den eingefahrenen Drehzylinder 7 und dem Pendellenker 49 belastete Hydraulikzylinder 18 aus- oder ein ausfährt.

Zur Ansteuerung einer Drehbewegung wird der Kolbenraum 22 des eingefahrenen Drehzylinders 7 durch Leitung 23 mit einem ersten Steuergerät 25 verbunden. Die Druckbeaufschlagung von Kolbenraum 22 des Drehzylinders 7 durch die Leitungen 23 führt zum Drehen des Pflugrahmens 4 um die Drehachse 6. Dabei fährt der Drehzylinder 7 in Abhängigkeit von der Drehrichtung über einen Totpunkt. Danach schlägt der zweite, ausgefahrene Drehzylinder 7 mit dem Pendellenker gegen den als Neigungsanschläge 16 ausgeführten, unbelasteten Hydraulikzylinder 18. Durch die Stellkraft des durch die Leitung 23 druckbeaufschlagten Drehzylinders 7 und nachfolgend durch das Eigengewicht des Pflugrahmens 4 entweicht das Hydrauliköl des bislang unbelasteten Drehzylinders durch die Leitung 24 in den anderen, geöffneten Anschluss des ersten Steuergerätes 25, bis der bislang unbelasteten Drehzylinder 7 in eingefahrener Endlage mittels seines Pendellenkers 49 auf dem gegenüberliegenden Neigungsanschlag 16 aufliegt.

Für das Drehen in die Gegenrichtung wird die Der Kolbenraum des nunmehr eingefahrenen Drehzylinders vom ersten Steuergerät 25 über die Leitung 24 mit Hydrauliköl beaufschlagt. Der Wendevorgang erfolgt dann genau umgekehrt zum vorher beschriebenen Wendevorgang. Das in dem Kolbenraum 22 befindliche Hydrauliköl fließt über die Leitung 23 zum ersten Steuergerät 25 zurück. Somit kann der gegenüberliegende Drehzylinder 7 nach Überschreiten des Totpunktes einfahren. Das Entlasten des Hydraulikzylinders 18 durch den dann mittels des Pendellenkers 49 nachgezogenen Drehzylinder 7 führt zu einem Abfallen des Sperrdrucks am Wechselventil 43, so dass dieses entsprechend umschaltet.

Das Wenden des Pfluges und die Neigungseinstellung gemäß der Ausführung in Figur 11-13 kann unabhängig voneinander erfolgen. Weiterhin ist anstelle des Wechselventils 43 auch eine separate Ansteuerung der als Hydraulikzylinder 17, 18 ausgebildeten Anschläge mittels eines ergänzend zum zweitem Steuergerät 30 zusätzlichen, nicht dargestellten dritten Steuergerätes möglich.

**Bezugszeichenliste**

| | | | |
|---|---|---|---|
| 1 | Drehpflug | 33 | Abschaltventil |
| 2 | Anbauturm | 34 | Anschluss |
| 3 | Anbaupunkt | 35 | Zuleitung |
| 4 | Pflugrahmen | 36 | Anschluss |
| 5 | Pflugkörper | 37 | Rückschlagventil |
| 5' | Pflugkörper | 38 | Erster Sperrblock |
| 6 | Drehachse | 39 | Endanschlag |
| 7 | Drehzylinder | 40 | Einstellmechanismus |
| 8 | Drehvorrichtung | 41 | Leitung |
| 9 | Anlenkpunkt | 42 | Zweiter Sperrblock |
| 10 | Längsachse | 43 | Wechselventil |
| 11 | Schwenkachse | 44 | Zuleitung |
| 12 | Hebel | 45 | Zuleitung |
| 13 | Anlenkpunkt | 46 | Mechanisch schaltbares Ventil |
| 14 | Kolbenstange | 47 | Elektrisch schaltbares Ventil |
| 15 | Zylinder | 48 | Zugrahmen |
| 16 | Neigungsanschlag | 49 | Pendellenker |
| 17 | Hydraulikzylinder | 50 | Fahrwerk |
| 18 | Einfachwirkender Hydraulikzylinder | 51 | Lenkachse |
| 19 | Doppeltwirkender Hydraulikzylinder | 52 | Pendelgelenk |
| 20 | Anlenkpunkt | | |
| 21 | Ringkammer | | |
| 22 | Kolbenraum | | |
| 23 | Leitung | | |
| 24 | Leitung | | |
| 25 | Erstes Steuergerät | | |
| 26 | Erste Ventileinheit | | |
| 27 | Gemeinsame Leitung | | |
| 28 | Zweite Ventileinheit | | |
| 29 | Zuleitung | | |
| 30 | Zweites Steuergerät | | |
| 31 | Absperrkörper | | |
| 32 | Blende | | |

## Patentansprüche

1. Drehpflug (1), umfassend einen Anbauturm (2) mit Anbaupunkten (3) zur Adaption des Drehpfluges (1) an ein Zugfahrzeug, einen Pflugrahmen (4), der auf einer Seite rechts wendende Pflugkörper (5) und auf der gegenüberliegenden Seite links wendende Pflugkörper (5') trägt und um eine Drehachse (6) durch eine von zumindest einem Drehzylinder (7) betätigte Drehvorrichtung (8) zumindest mittelbar gegenüber dem Anbauturm (2) oder einem Zugrahmen drehbar ist, wobei zur Ansteuerung einer Drehbewegung die Ringkammer (21) und/oder der Kolbenraum (22) des zumindest einen Drehzylinders (7) durch Zuleitungen (23, 24) mit einem ersten Steuergerät (25) und einer ersten Ventileinheit (26) verbunden sind, wobei die Drehbewegung durch einstellbare Neigungsanschläge (16) begrenzt ist, **dadurch gekennzeichnet,**
**dass** zur Begrenzung der Drehbewegung zwei die Neigungsanschläge (16) bildende Hydraulikzylinder (17) am Anbauturm (2) vorgesehen sind, die den Verfahrweg des Drehzylinders (7) oder die dadurch erzeugte Drehbewegung begrenzen.

2. Drehpflug (1), umfassend einen Anbauturm (2) mit Anbaupunkten (3) zur Adaption des Drehpfluges (1) an ein Zugfahrzeug, einen Zugrahmen (48) mit daran angeordnetem Fahrwerk (50), einen Pflugrahmen (4), der auf einer Seite rechts wendende Pflugkörper (5) und auf der gegenüberliegenden Seite links wendende Pflugkörper (5') trägt und um eine Drehachse (6) durch eine von einem ersten und einem zweiten Drehzylinder (7) betätigte Drehvorrichtung (8) zumindest mittelbar gegenüber dem Anbauturm (2) oder dem Zugrahmen (48) drehbar ist, wobei zur Ansteuerung einer Drehbewegung der Kolbenraum (22) des zumindest einen Drehzylinders (7) durch Zuleitungen (23, 24) mit einem ersten Steuergerät (25) und einer ersten Ventileinheit (26) verbunden ist, wobei die Drehbewegung durch einstellbare Neigungsanschläge (16) direkt oder mittels weiterer, mit den Drehzylindern verbundene Pendellenker (49) begrenzt ist, **dadurch gekennzeichnet,**
**dass** zur Begrenzung der Drehbewegung zwei die Neigungsanschläge (16) bildende Hydraulikzylinder (18) am Zugrahmen (48) vorgesehen sind, die den Verfahrweg des Drehzylinders (7), der Pendellenker (49) oder die durch den Verfahrweg erzeugte Drehbewegung begrenzen.

3. Drehpflug (1) nach Anspruch 1 oder 2, **dadurch gekennzeichnet, dass** die Hydraulikzylinder (17) als einfachwirkende Hydraulikzylinder (18) oder doppeltwirkende Hydraulikzylinder (19) ausgeführt sind.

4. Drehpflug (1) nach Anspruch 1 bis 3, **dadurch gekennzeichnet, dass** die beiden Hydraulikzylinder (17, 18, 19) untereinander durch zumindest eine gemeinsame Leitung (27, 41) kommunizierend miteinander verbunden sind, so dass beide Hydraulikzylinder (17, 18, 19) mit gleichem Druck beaufschlagt sind, wobei die zumindest eine gemeinsame Leitung (27, 41) durch eine zweite Ventileinheit (28) mit einer Zuleitung (29) einer Hydraulikölquelle verbindbar ist, um eine Druckänderung in der zumindest einen gemeinsamen Leitung (27, 41) der beiden Hydraulikzylinder (17, 18, 19) zu bewirken.

5. Drehpflug (1) nach einem der Ansprüche 1 bis 4, **dadurch gekennzeichnet, dass** die relative Position der beiden Hydraulikzylinder (17, 18, 19) zueinander jeweils durch einen Einstellmechanismus (40) einstellbar ist.

6. Drehpflug (1) nach einem der Ansprüche 3 bis 5, **dadurch gekennzeichnet, dass** zur Verstellung eines Neigungswinkels ein zweites Steuergerät (30) vorgesehen ist, welches dazu eingerichtet ist, die zweite Ventileinheit (28) anzusteuern, um in Abhängigkeit vom Anliegen des Drehzylinders (7) an dem jeweiligen Hydraulikzylinder (17, 18, 19) wechselweise die Ringkammer (21) oder den Kolbenraum (22) des Drehzylinders (7) sowie, in Abhängigkeit von einer Zunahme des einzustellenden Neigungswinkels, gleichzeitig den Hydraulikzylinder (17, 18, 19) mit Druck zu beaufschlagen.

7. Drehpflug (1) nach Anspruch 6, **dadurch gekennzeichnet, dass** die zweite Ventileinheit (28) ein Steuerventil umfasst, welches als ein Wechselventil (43), ein elektrisch schaltbares Ventil (47) oder ein mechanisch schaltbares Ventil (46) ausgeführt ist, welches in einer die Kolbenräume oder die Ringräume der Hydraulikzylinder (17, 18, 19) verbindenden gemeinsamen Zuleitung (27, 41) angeordnet ist, welches in Abhängigkeit vom Anliegen des Drehzylinders (7) an dem jeweiligen Hydraulikzylinder (17, 18, 19) eine Zuleitung (29) zu dem zweiten Steuergerät (30) öffnet und zu dem unbelasteten Hydraulikzylinder (17, 18, 19) sperrt.

8. Drehpflug (1) nach einem der Ansprüche 1 bis 7, **dadurch gekennzeichnet, dass** die zweite Ventileinheit (28) ein Abschaltventil (33) umfasst, welches dem Kolbenraum (22) oder dem Ringkammer (21) des Drehzylinders (7) fluidleitend zugeordnet ist, wobei das Abschaltventil (33) während des Drehvorgangs mit einem Steuerdruck aus zumindest einem der beiden Hydraulikzylinder (17, 18, 19) beaufschlagt ist, und bei Erreichen eines am Abschaltventil (33) voreingestellten Abschaltdrucks das Zufließen in den Kolbenraum (22) oder das Abfließen aus der Ringkammer (21) des Drehzylinders (7) unterbricht.

9. Drehpflug (1) nach einem der Ansprüche 1 bis 8, **dadurch gekennzeichnet, dass** an den Hydraulikzylindern außenseitig Endanschläge (39) angeordnet sind, an denen sich der erste Hebel (12) abstützt.

10. Drehpflug (1) nach einem der Ansprüche 1 bis 9, **dadurch gekennzeichnet, dass** die Drehvorrichtung (8) eine Hebelanordnung (12, 14) umfasst, mittels welcher der Drehzylinder (7) an dem Pflugrahmen (4) angelenkt ist.

11. Drehpflug (1) nach einem der Ansprüche 1 bis 10 **dadurch gekennzeichnet, dass** dem Drehzylinder (7) ein erster Sperrblock (38) zugeordnet ist, welcher die Zuleitungen (23, 24) zum Kolbenraum (22) und Ringkammer (21) des Drehzylinders (7) mit Zuleitungen (29, 35) des zweiten Steuergerätes (30) verbindet.

12. Drehpflug (1) nach einem der Ansprüche 2 bis 11, **dadurch gekennzeichnet, dass** den doppeltwirkenden Hydraulikzylindern (19) ein zweiter Sperrblock (42) zugeordnet ist, welcher die Hydraulikzylinder (19) mit dem zweiten Steuergerät (30) verbindet.

13. Drehpflug (1) nach einem der vorangehenden Ansprüche, **dadurch gekennzeichnet, dass** eine Rahmeneinschwenkvorrichtung zum Ein- und Ausschwenken an dem Pflugrahmen (4) angreift, welche in Abhängigkeit eines vom Anliegen des Drehzylinders (7) an einem der Hydraulikzylinder (17, 18, 19) hervorgerufenen Druckes ansteuerbar ist, um den Pflugrahmen (4) vor der Durchführung des Drehvorganges durch den Drehzylinder (7) einzuschwenken und nach der Durchführung des Drehvorganges mit dem Anliegen des Drehzylinders (7) an dem anderen Hydraulikzylinder (17, 18, 19) auszuschwenken.

14. Verfahren (1) zum Betreiben eines Drehpflugs (1) nach Anspruch 1, 2, 3 oder 4.

15. Verfahren (1) nach Anspruch 14, **dadurch gekennzeichnet, dass** zur Verstellung eines Neigungswinkels eine zweite Ventileinheit (28) und ein zweites Steuergerät (30) verwendet werden, welche dazu eingerichtet sind, in Abhängigkeit vom Anliegen des Drehzylinders (7) an dem jeweiligen Hydraulikzylinder (17, 18, 19) wechselweise die Ringkammer (21) oder den Kolbenraum (22) des Drehzylinders (7) sowie, in Abhängigkeit von einer Zunahme des einzustellenden Neigungswinkels, gleichzeitig den Hydraulikzylinder (17, 18, 19) mit Druck zu beaufschlagen.

16. Verfahren (1) nach Anspruch 14 oder 15, **dadurch gekennzeichnet, dass** eine Rahmeneinschwenkvorrichtung zum Ein- und Ausschwenken an dem Pflugrahmen (4) angreift, welche in Abhängigkeit eines vom Anliegen des Drehzylinders (7) an einem der Hydraulikzylinder (17, 18, 19) hervorgerufenen Druckes angesteuert wird, um den Pflugrahmen (4) vor der Durchführung des Drehvorganges durch den Drehzylinder (7) einzuschwenken und nach der Durchführung des Drehvorganges mit dem Anliegen des Drehzylinders (7) an dem anderen Hydraulikzylinder (17, 18, 19) auszuschwenken.

## Claims

1. A reversible plough (1), comprising a headstock (2) with attachment points (3) for adaptation of the reversible plough (1) to a traction vehicle, a plough frame (4), which on one side carries right-turning plough bodies (5) and on the opposite side carries left-turning plough bodies (5') and is pivotable about a pivot axis (6) by a pivoting device (8) actuated by at least one pivot cylinder (7) at least indirectly relative to the headstock (2) or to a traction frame, wherein for controlling a pivot movement the annular chamber (21) and/or the piston space (22) of the at least one pivot cylinder (7) are connected by supply lines (23, 24) to a first control device (25) and a first valve unit (26), wherein the pivot movement is limited by adjustable inclination stops (16), **characterised**
**in that** for limiting the pivot movement two hydraulic cylinders (17) forming the inclination stops (16) are provided on the headstock (2), which limit the travel of the pivot cylinder (7) or the pivot movement thereby created.

2. The reversible plough (1), comprising a headstock (2) with attachment points (3) for adaptation of the reversible plough (1) to a traction vehicle, a traction frame (48) with chassis (50) arranged their on, a plough frame (4), which on one side carries right-turning plough bodies (5) and on the opposite side carries left-turning plough bodies (5') and is pivotable about a pivot axis (6) by a pivot device (8) actuated by a first and a second pivot cylinder (7) at least indirectly relative to the headstock (2) or the traction frame (48), wherein for controlling a pivot movement the piston space (22) of the at least one pivot cylinder (7) is connected by supply lines (23, 24) to a first control device (25) and a first valve unit (26), wherein the pivot movement is limited by adjustable inclination stops (16) directly or by means of further swing levers (49) connected to the pivot cylinders, **characterised**
**in that** for limiting the pivot movement two hydraulic cylinders (18) forming the inclination stops (16) are provided on the traction frame (48), which limit the travel of the pivot cylinder (7), of the swing levers (49) or the pivot movement generated by the travel.

3. The reversible plough (1) according to Claim 1 or 2, **characterised in that** the hydraulic cylinders (17) are embodied as single-acting hydraulic cylinders (18) or double-acting hydraulic cylinders (19).

4. The reversible plough (1) according to Claims 1 to 3, **characterised in that** the two hydraulic cylinders (17, 18, 19) are inter-communicatingly connected by at least one common line (27, 41), so that both hydraulic cylinders (17, 18, 19) are subjected to the same pressure, wherein the at least one common line (27, 41) is connectable through a second valve unit (28) to a supply line (29) of a hydraulic oil source in order to bring about a pressure change in the at least one common line (27, 41) of the two hydraulic cylinders (17, 18, 19).

5. The reversible plough (1) according to any one of the Claims 1 to 4, **characterised in that** the position of the two hydraulic cylinders (17, 18, 19) relative to one another is adjustable in each case by an adjusting mechanism (40).

6. The reversible plough (1) according to any one of the Claims 3 to 5, **characterised in that** for adjusting an inclination angle a second control device (30) is provided, which is equipped in order to control the second valve unit (28) in order to alternately pressurise the annular chamber (21) or the piston space (22) of the pivot cylinder (7) depending on the pivot cylinder (7) lying against the respective hydraulic cylinder (17, 18, 19) and at the same time pressurise the hydraulic cylinder (17, 18, 19) depending on an increase of the inclination angle to be adjusted.

7. The reversible plough (1) according to Claim 6, **characterised in that** the second valve unit (28) comprises a control valve which is embodied as a change-over valve (43), an electrically switchable valve (47) or a mechanically switchable valve (46), which is arranged in a common supply line (27, 41) connecting the piston spaces or the ring spaces of the hydraulic cylinders (17, 18, 19), which depending on the pivot cylinder (7) lying against the respective hydraulic cylinder (17, 18, 19), opens a supply line (29) to the second control device (30) and blocks the same to the unloaded hydraulic cylinder (17, 18, 19).

8. The reversible plough (1) according to any one of the Claims 1 to 7, **characterised in that** the second valve unit (28) comprises a shut-off valve (33), which in a fluid-conducting manner is assigned to the piston space (22) or the annular chamber (21) of the pivot cylinder (7), wherein the shut-off valve (33) during the pivot operation is subjected to a control pressure from at least one of the two hydraulic cylinders (17, 18, 19), and on reaching a shut-off pressure preset on the shut-off valve (33) interrupts the flow into the piston space (22) or the flow out of the annular chamber (21) of the pivot cylinder (7).

9. The reversible plough (1) according to any one of the Claims 1 to 8, **characterised in that** on the hydraulic cylinders end-stops (39) are arranged on the outside, on which the first lever (12) supports itself.

10. The reversible plough (1) according to any one of the Claims 1 to 9, **characterised in that** the pivot device (8) comprises a lever arrangement (12, 14), by means of which the pivot cylinder (7) is articulated on the plough frame (4).

11. The reversible plough (1) according to any one of the Claims 1 to 10, **characterised in that** the pivot cylinder (7) is assigned a first shut-off block (38), which connects the supply lines (23, 24) to the piston space (22) and annular chamber (21) of the pivot cylinder (7) with supply lines (29, 35) of the second control device (30).

12. The reversible plough (1) according to any one of the Claims 2 to 11, **characterised in that** the double-acting hydraulic cylinders (19) are assigned a second shut-off block (42), which connects the hydraulic cylinders (19) with the second control device (30).

13. The reversible plough (1) according to any one of the preceding claims, **characterised in that** a pivot swing-in device for in-swinging and out-swinging acts on the plough frame (4), which is controllable depending on a pressure caused by the pivot cylinder (7) lying against one of the hydraulic cylinders (17, 18, 19), in order to swing-in the plough frame (4) before the pivot operation by the pivot cylinder (7) has been performed and swing-out the plough frame (4) on the other hydraulic cylinder (17, 18, 19) after the pivot operation has been performed with the pivot cylinder (7) lying against the other hydraulic cylinder (17, 18, 19).

14. A method (1) for operating a reversible plough (1) according to Claim 1, 2, 3 or 4.

15. The method (1) according to Claim 14, **characterised in that** for adjusting an inclination angle a second valve unit (28) and a second control device (30) are used which are equipped, depending on the pivot cylinder (7) lying against the respective hydraulic cylinder (17, 18, 19) to alternately pressurise the annular chamber (21) or the piston chamber (22) of the pivot cylinder (7) and depending on an increase of the inclination angle to be adjusted, simultaneously pressurise the hydraulic cylinder (17, 18, 19).

16. The method (1) according to Claim 14 or 15, **characterised in that** a frame swing-in device for swinging-in and swinging-out acts on the plough frame (4), which is controlled depending on a pressure caused by the pivot cylinder (7) lying against one of the hydraulic cylinders (17, 18, 19), in order to swing-in the plough frame (4) before the pivot operation by the pivot cylinder (7) has been performed and swing-out the same after the pivot operation with the pivot cylinder (7) lying against the other hydraulic cylinder (17, 18, 19) has been performed.

## Revendications

1. Charrue réversible (1), comprenant une tour de fixation (2) pourvue de points de fixation (3) destinés à adapter la charrue réversible (1) à un véhicule tracteur, un châssis (4) de charrue, qui sur un côté, supporte des corps (5) de charrue tournant vers la droite et sur le côté opposé, supporte des corps (5') de charrue tournant vers la gauche et qui est rotatif au moins indirectement autour d'un axe de rotation (6) par rapport à la tour de fixation (2) ou à un cadre de traction par un dispositif de rotation (8) actionné par au moins un vérin rotatif (7), pour actionner un déplacement en rotation, la chambre annulaire (21) et / ou la chambre de piston (22) de l'au moins un vérin rotatif (7) étant reliées par des conduites d'alimentation (23, 24) avec un premier dispositif de commande (25) et une première unité de vanne (26), le déplacement en rotation étant limité par des butées d'inclinaison (16) réglables, **caractérisée**
**en ce que** pour limiter le déplacement en rotation, sont prévus sur la tour de fixation (2) deux vérins hydrauliques (17) formant les butées d'inclinaison (16), qui limitent la course de déplacement du vérin rotatif (7) ou le déplacement en rotation généré par celle-ci.

2. Charrue réversible (1), comprenant une tour de fixation (2) pourvue de points de fixation (3), destinés à adapter la charrue réversible (1) à un véhicule tracteur, un cadre de traction (48) pourvu d'un train de roulement (50) placé sur celui-ci, un châssis (4) de charrue, qui sur un côté, supporte des corps (5) de charrue tournant vers la droite et sur le côté opposé, supporte des corps (5') de charrue tournant vers la gauche et qui est rotatif au moins indirectement autour d'un axe de rotation (6) par rapport à la tour de fixation (2) ou au cadre de traction (48) par un dispositif de rotation (8) actionné par un premier et un deuxième vérins rotatifs (7), pour actionner un déplacement en rotation, la chambre de piston (22) de l'au moins un vérin rotatif (7) étant reliée par des conduites d'alimentation (23, 24) avec un premier dispositif de commande (25) et une première unité de vanne (26), le déplacement en rotation étant limité directement ou au moyen de leviers oscillants (49) supplémentaires, reliés avec les vérins rotatifs par des butées d'inclinaison (16) réglables, **caractérisée**
**en ce que** pour limiter le déplacement en rotation sont prévus sur le cadre de traction (48) deux vérins hydrauliques (18) formant les butées d'inclinaison (16), qui limitent la course de déplacement du vérin rotatif (7), des leviers oscillants (49) ou le déplacement en rotation généré par la course de déplacement.

3. Charrue réversible (1) selon la revendication 1 ou 2, **caractérisée en ce que** les vérins hydrauliques (17) sont réalisés sous la forme de vérins hydrauliques (18) à simple action ou de vérins hydrauliques (19) à double action.

4. Charrue réversible (1) selon la revendication 1 à 3, **caractérisée en ce que** les vérins hydrauliques (17, 18, 19) sont reliés entre eux en communication mutuelle par au moins une conduite (27, 41) commune, de sorte que les deux vérins hydrauliques (17, 18, 19) soient soumis à une pression identique, l'au moins une conduite (27, 41) commune étant susceptible d'être reliée par une deuxième unité de vanne (28) avec une conduite d'alimentation (29) d'une source d'huile hydraulique, pour initier une variation de pression dans l'au moins une conduite (27, 41) commune des deux vérins hydrauliques (17, 18, 19).

5. Charrue réversible (1) selon l'une quelconque des revendications 1 à 4, **caractérisée en ce que** la position relative des deux vérins hydrauliques (17, 18, 19) l'un par rapport à l'autre est chaque fois réglable par un mécanisme de réglage (40).

6. Charrue réversible (1) selon l'une quelconque des revendications 3 à 5, **caractérisée en ce que** pour ajuster un angle d'inclinaison, il est prévu un deuxième dispositif de commande (30), lequel est configuré pour actionner la deuxième unité de vanne (28), pour soumettre, en fonction de l'application du vérin rotatif (7) sur le vérin hydraulique (17, 18, 19) respectif, tour à tour la chambre annulaire (21) ou la chambre de piston (22) du vérin rotatif (7) ainsi qu'en fonction d'une augmentation de l'angle d'inclinaison qui doit être réglé, simultanément le vérin hydraulique (17, 18, 19) à une pression.

7. Charrue réversible (1) selon la revendication 6, **caractérisée en ce que** la deuxième unité de vanne (28) comprend une vanne de commande, laquelle est réalisée sous la forme d'une vanne à deux voies (43), d'une vanne (47) à commutation électrique ou d'une vanne (46) à commutation mécanique, laquelle est placée dans une conduite d'alimentation (27, 41) commune reliant les chambres de pistons ou les chambres annulaires des vérins hydrauliques (17, 18, 19), laquelle en fonction de l'application du vérin rotatif (7) sur le vérin hydraulique (17, 18, 19) respectif, ouvre une conduite d'alimentation (29) vers le deuxième dispositif de commande (30) et la bloque vers le vérin hydraulique (17, 18, 19) non contraint.

8. Charrue réversible (1) selon l'une quelconque des revendications 1 à 7, **caractérisée en ce que** la deuxième unité de vanne (28) comprend une vanne d'arrêt (33), laquelle est associée par liaison fluidique à la chambre de piston (22) ou à la chambre annulaire (21) du vérin rotatif (7), pendant le processus de rotation, la vanne d'arrêt (33) étant soumise à une pression de commande provenant d'au moins l'un des deux vérins hydrauliques (17, 18, 19) et à l'atteinte d'une pression d'arrêt préréglée sur la vanne d'arrêt (33), interrompant l'afflux dans la chambre de piston (22) ou l'écoulement hors de la chambre annulaire (21) du vérin rotatif (7).

9. Charrue réversible (1) selon l'une quelconque des revendications 1 à 8, **caractérisée en ce que** sur les vérins hydrauliques sont placées sur la face extérieure des butées de fin de course (39), sur lesquelles s'appuie le premier levier (12).

10. Charrue réversible (1) selon l'une quelconque des revendications 1 à 9, **caractérisée en ce que** le dispositif de rotation (8) comprend un agencement de leviers (12, 14), au moyen duquel le vérin rotatif (7) est articulé sur le châssis (4) de charrue.

11. Charrue réversible (1) selon l'une quelconque des revendications 1 à 10, **caractérisée en ce qu'**au vérin rotatif (7) est associé un premier bloc d'arrêt (38), lequel relie les conduites d'alimentation (23, 24) vers la chambre de piston (22) et la chambre annulaire (21) du vérin rotatif (7) avec des conduites d'alimentation (29, 35) du deuxième dispositif de commande (30).

12. Charrue réversible (1) selon l'une quelconque des revendications 2 à 11, **caractérisée en ce qu'**aux vérins hydrauliques (19) à double action est associé un deuxième bloc d'arrêt (42), lequel relie les vérins hydrauliques (19) avec le deuxième dispositif de commande (30).

13. Charrue réversible (1) selon l'une quelconque des revendications précédentes, **caractérisée en ce que** pour le pivotement vers l'intérieur et vers l'extérieur, il s'engage sur le châssis (4) de charrue un dispositif de pivotement de châssis, lequel est actionnable en fonction de la pression initiée par l'application du vérin rotatif (7) sur l'un des vérins hydrauliques (17, 18, 19), pour faire pivoter vers l'intérieur le châssis (4) de charrue avant la réalisation du processus de rotation par le vérin rotatif (7) et pour le faire pivoter vers l'extérieur après la réalisation du processus de rotation, avec l'application du vérin rotatif (7) sur l'autre vérin hydraulique (17, 18, 19).

14. Procédé (1), destiné à faire fonctionner une charrue réversible (1) selon la revendication 1, 2, 3 ou 4.

15. Procédé (1) selon la revendication 14, **caractérisé en ce que** pour l'ajustage d'un angle d'inclinaison, l'on utilise une deuxième unité de vanne (28) et un deuxième dispositif de commande (30), lesquels sont configurés pour, en fonction de l'application du vérin rotatif (7) sur le vérin hydraulique (17, 18, 19) respectif, soumettre tour à tour la chambre annulaire (21) ou la chambre de piston (22) du vérin rotatif (7), ainsi qu'en fonction d'une augmentation de l'angle d'inclinaison qui doit être réglé, soumettre simultanément le vérin hydraulique (17, 18, 19) à une pression.

16. Procédé (1) selon la revendication 14 ou 15, **caractérisé en ce que** pour le pivotement vers l'intérieur ou vers l'extérieur, il s'engage sur le châssis (4) de charrue un dispositif de pivotement de châssis, lequel est actionné par la pression initiée par l'application du vérin rotatif (7) sur l'un des vérins hydrauliques (17, 18, 19), pour faire pivoter le châssis (4) de charrue vers l'intérieur avant la réalisation du processus de rotation par le vérin rotatif (7) et vers l'extérieur, après la réalisation du processus de rotation avec l'application du vérin rotatif (7) sur l'autre vérin hydraulique (17, 18, 19).
